# EUROPÄISCHE PATENTSCHRIFT

(11) **EP 2 681 465 B1**
(45) Veröffentlichungstag und Bekanntmachung des Hinweises auf die Patenterteilung: **25.10.2017**
(21) Anmeldenummer: 12707717.0
(22) Anmeldetag: 15.02.2012
(51) Int. Cl.: F16H 25/20, H02K 7/00

(54) **VERSTELLANTRIEB SOWIE VERFAHREN ZUR HERSTELLUNG EINES VERSTELLANTRIEBS**
ADJUSTING DRIVE AND METHOD FOR PRODUCING AN ADJUSTING DRIVE
ENTRAÎNEMENT DE RÉGLAGE ET PROCÉDÉ DE FABRICATION D'UN ENTRAÎNEMENT DE RÉGLAGE

(30) Priorität: 28.02.2011 DE 102011000972; 12.04.2011 DE 102011001971
(43) Veröffentlichungstag der Anmeldung: 08.01.2014
(73) Patentinhaber: Adient Luxembourg Holding S.à r.l., 2453 Luxembourg (LU)
(72) Erfinder: ARNDT, Thomas, 40789 Monheim (DE); STRZODKA, Manfred, 45289 Essen (DE); PHILIP, Tony, Ann Arbor 48105 MI (US); POCZIK, Tamas, 50733 Köln (DE)
(74) Vertreter: Loock, Jan Pieter
(86) Internationale Anmeldenummer: PCT/EP2012/052606
(87) Internationale Veröffentlichungsnummer: WO 2012/116892

(56) Entgegenhaltungen:
- DE-A1-102005 046 354
- US-A- 3 549 218
- US-A1- 2005 134 131
- US-A1- 2009 206 644

## Beschreibung

Die Erfindung betrifft einen Verstellantrieb sowie ein Verfahren zur Herstellung eines Verstellantriebs, insbesondere für eine Lenksäulenverstellung oder einen Fahrzeugsitz eines Kraftfahrzeuges, mit
- einem Gehäuse,
- einer in dem Gehäuse drehbar gelagerten Ausgangswelle und
- einem keilförmigen Ausgleichselement zur Vermeidung eines Axialspiels der Ausgangswelle, wobei das Ausgleichselement in seiner Betriebsposition an dem Gehäuse und einem Axialanschlag der Ausgangswelle abgestützt ist.

Verstellantriebe der eingangs genannten Art werden in vielfältigen Ausgestaltungen in Kraftfahrzeugen zur motorischen Verstellung diverser Fahrzeugkomponenten verwendet, wobei durch sie bspw. eine Anpassung der Fahrzeugbedieneinrichtungen, Sitzpositionen oder dgl. an die jeweiligen Insassen möglich ist. So finden Verstellantriebe der eingangs genannten Art u. a. Anwendung im Bereich von Kraftfahrzeugsitzen zur Einstellung der verschiedenen Sitzkomponenten sowie ferner zur Anpassung der Position der Lenksäule an den jeweiligen Fahrer.

Um eine komfortable und zuverlässige Einstellmöglichkeit zu bieten sowie ferner, um unangenehme Klackgeräusche im Falle einer Drehrichtungsumkehr der Ausgangswelle zu vermeiden, ist es erforderlich, das Axialspiel der Ausgangswelle auszugleichen, damit diese im Wesentlichen spielfrei mit der zu verstellenden Fahrzeugkomponente in Eingriff gelangt.

Aus der US 2005/0134131 A1 ist eine Vorrichtung zur Anpassung eines Axialspiels eines ein Gehäuse aufweisenden, elektrischen Motors, mit einer gegenüber dem Gehäuse drehbar gelagerten Gewindestange sowie zwei, jeweils einen keilförmigen Abschnitt aufweisenden Elementen bekannt, wobei eines der Elemente in seiner Betriebsposition an dem Gehäuse und an einem Axialanschlag der Gewindestange abgestützt ist. Jedoch werden hierbei zur Anpassung des Axialspiels wenigstens zwei zusammenwirkende Elemente benötigt, was zu einem aufwändigen Aufbau der Vorrichtung und damit verbunden zu einer verringerten Zuverlässigkeit führt.

Aus der DE 198 54 535 A1 ist ein gattungsgemäßer Verstellantrieb für eine Scheibenwischanlage eines Kraftfahrzeuges bekannt, bei dem über einen Keilschieber, welcher radial gegen einen Axialanschlag der Ankerwelle drückt und dabei die Ausgangswelle axial verschiebt, das Axialspiel der Ausgangswelle ausgeglichen wird. Die notwendige, auf den Keilschieber wirkende Verschiebekraft wird dabei durch ein Federelement aufgebracht, welches den Keilschieber in Richtung auf die Ausgangswelle drückt. Infolge einer hohen Dauerbelastung des Federelements kommt es über die gesamte Lebensdauer jedoch zu einem Nachlassen der elastischen Eigenschaften, wodurch das Axialspiel nicht mehr zuverlässig ausgeglichen wird, so dass sich die Ausgangswelle, insbesondere unter Belastung, hin und her bewegen kann.

Der Erfindung liegt die Aufgabe zugrunde, einen Verstellantrieb sowie ein Verfahren zur Herstellung eines Verstellantriebs der eingangs genannten Art bereitzustellen, bei dem zuverlässig und dauerhaft ein Axialspiel der Ausgangswelle ausgeglichen ist.

Die Erfindung löst die Aufgabe durch einen Verstellantrieb mit den Merkmalen des Anspruchs 1 sowie ein Verfahren mit den Merkmalen des Anspruchs 13. Vorteilhafte Weiterbildungen der Erfindungen sind in den abhängigen Ansprüchen angegeben.

Kennzeichnend für den erfindungsgemäßen Verstellantrieb ist, dass das Ausgleichselement zur Sicherung der axialspielfreien Anordnung der Ausgangswelle in seiner Betriebsposition mittels Ultraschallschweißen mit dem Gehäuse verbunden ist. Unter der Betriebsposition wird dabei im Rahmen der Erfindung die Position des Ausgleichselements verstanden, in der dieses die Ausgangswelle am Gehäuse in einer axialspielfreien Anordnung festlegt, so dass einer spielbehafteten Einstellung der durch den Verstellantrieb eingestellten Fahrzeugkomponenten oder einer unangenehmen Geräuschbelastung während des Betriebs des Verstellantriebs zuverlässig vorgebeugt wird.

Gemäß der Erfindung ist das Ausgleichselement in eine Position gegenüber der Ausgangswelle verschoben, in der das Ausgleichselement derart einerseits an dem Gehäuse und andererseits an einem Axialanschlag der Ausgangswelle anliegt, dass die Ausgangswelle kein Axialspiel mehr aufweist. Zur Sicherung dieser Betriebsposition des Ausgleichselements ist dieses in dieser Lage relativ gegenüber dem Gehäuse durch Ultraschallschweißen mit dem Gehäuse verbunden. Das Gehäuse sowie das Ausgleichselement sind hierzu zumindest im Bereich der Ultraschallschweißverbindung aus einem Kunststoff gebildet, wobei sowohl das Gehäuse als auch das Ausgleichselement vollständig aus einem Kunststoff gefertigt sein können.

Die Verbindung mittels Ultraschallschweißen zeichnet sich durch ihre zuverlässige untrennbare Verbindung von Gehäuse und Ausgleichselement und die damit erreichte dauerhafte Festlegung des Ausgleichselements an dem Gehäuse und somit gegenüber der Ausgangswelle aus. Darüber hinaus lässt sich das Ultraschallschweißen mit einer hohen Schweißgeschwindigkeit und guter Wirtschaftlichkeit in einfacher Weise kostengünstig realisieren. Der thermoplastische Kunststoff des Ausgleichselements und des Gehäuses sind im Kontaktbereich aufgeschmolzen und im Rahmen des Erstarrungsprozesses zusammengefügt, so dass sich eine sichere Anordnung des Ausgleichselements in der Betriebsposition ergibt.

Insgesamt weist der erfindungsgemäße Verstellantrieb somit über die gesamte Lebensdauer eine axialspielfrei angeordnete Ausgangswelle auf, wobei insbesondere die mittels Ultraschallschweißen hergestellte Verbindung des Ausgleichselements mit dem Gehäuse, durch die die Betriebsposition dauerhaft festgelegt ist, in zuverlässiger Weise gewährleistet, dass die spielfreie Anordnung auch über die gesamte Lebensdauer des Verstellantriebs beibehalten wird.

Zum Ausgleich des Axialspiels stützt sich das Ausgleichselement in seiner Betriebsposition einerseits an dem Gehäuse und andererseits an einem Axialanschlag der Ausgangswelle ab und sichert so die hierdurch erreichte spielfreie Anordnung der Ausgangswelle. Das Ausgleichselement kann dabei an beliebiger Stelle mit einem Axialanschlag der Ausgangswelle zusammenwirken, wobei der Axialanschlag bspw. durch ein Wellenende gebildet sein kann, wobei dann das Ausgleichselement zwischen dem Wellenende und dem Gehäuse angeordnet ist.

Nach einer besonders vorteilhaften Ausgestaltung der Erfindung weist das Ausgleichselement jedoch eine U-förmige Aufnahmeöffnung auf, die die Ausgangswelle im Bereich eines einen Axialanschlag bildenden Wellenabsatzes umgreift. Gemäß dieser Ausgestaltung der Erfindung bildet ein Wellenabsatz, welcher in beliebiger Form gebildet sein kann, bspw. durch ein auf der Welle angeordnetes Ritzel mit einer sich radial von der Ausgangswelle erstreckenden, im Wesentlichen senkrecht zur Wellenachse verlaufenden Fläche, einen Axialanschlag, an dem das Ausgleichselement in seiner Betriebsposition anliegt. Um dabei eine besonders gute Anordnung des Ausgleichselements gegenüber der Ausgangswelle zu ermöglichen, weist das Ausgleichselement eine U-förmige Aufnahmeöffnung auf, deren Öffnungsquerschnitt an den Durchmesser der Ausgangswelle im Bereich des in der Betriebsposition montierten Ausgleichselements angepasst ist.

Eine entsprechende Weiterbildung der Erfindung gewährleistet in besonderem Maße eine lagestabile Anordnung des Ausgleichselements gegenüber der Ausgangswelle in der gewählten Betriebsposition aber auch in einer vormontierten Lage, in der das Ausgleichselement noch radial in Richtung auf die Ausgangswelle in die Betriebsposition verschoben werden muss, um eine axial spielfreie Anordnung der Abtriebswelle zu erreichen. Darüber hinaus ermöglicht die U-förmige Aufnahmeöffnung eine sichere Montage des Ausgleichselements an der Ausgangswelle und verringert im Betrieb auftretende, auf das Ausgleichselement wirkende Belastungen.

Die Abstützung des Ausgleichselements an dem Gehäuse kann grundsätzlich an beliebiger Stelle erfolgen. Denkbar ist bspw. die Ausgestaltung des Ausgleichselements derart, dass das Ausgleichselement mit einem radial gegenüber dem Axialanschlag verlagerten Abschnitt an einem geeigneten Gehäusebereich abgestützt ist. Nach einer besonders vorteilhaften Ausgestaltung der Erfindung liegt das Ausgleichselement jedoch in der Betriebsposition mit einer dem Axialanschlag abgewandten Stützfläche an einer Anlagefläche des Gehäuses an. Gemäß dieser Ausgestaltung der Erfindung erstreckt sich das Ausgleichselement in einem Bereich zwischen zwei einander gegenüberliegenden Flächen, nämlich des Gehäuses und des Axialanschlags. Eine Stützfläche des Ausgleichselements liegt an einer Anlagefläche des Gehäuses und der Axialanschlag der Ausgangswelle an einer Anschlagfläche des Ausgleichselements an und gewährleistet somit in besonders zuverlässiger Weise eine axialspielfreie Lagerung der Ausgangswelle in der Betriebsposition des Ausgleichselements. Das Ausgleichselement hat in der Betriebsposition die Ausgangswelle über den Axialanschlag in eine axialspielfreie Position verschoben, wobei das Ausgleichselement auf der dem Axialanschlag gegenüberliegenden Seite mit seiner Stützfläche an dem Gehäuse anliegt.

Wesentlich für die Funktion des Ausgleichselements ist dessen keilförmige Ausgestaltung. In Abhängigkeit von der radialen Position des Ausgleichselements gegenüber der Ausgangswelle kann somit der Abstand durch das Ausgleichselement zwischen dem Gehäuse und einem Axialanschlag über das Ausgleichselement eingestellt werden. Grundsätzlich genügt bereits die Verwendung eines keilförmigen Ausgleichselements zur Gewährleistung dessen Funktion im erfindungsgemäßen Verstellantrieb, wobei dann aufgrund der keilförmigen Ausgestaltung jedoch zum Teil eine linienförmige Verbindung zwischen dem Ausgleichselement und dem Axialanschlag und/oder der zugeordneten Anlagefläche im Gehäuse vorliegen kann.

Nach einer vorteilhaften Weiterbildung der Erfindung ist daher vorgesehen, dass die Anlagefläche gegenüber einer vertikal zur Ausgangswelle verlaufenden Ebene entsprechend der Keilform des Ausgleichselements entgegengesetzt geneigt ist. Gemäß dieser Ausgestaltung der Erfindung ist die Anlagefläche des Gehäuses, welche mit dem Ausgleichselement in der Betriebsposition zusammenwirkt, entsprechend dem Keilwinkel des Ausgleichselements geneigt, wobei der Verlauf derart ist, dass die Fläche sich in Richtung auf die Einschubrichtung des Ausgleichselements verjüngt. Hierdurch ergibt sich in der Betriebsposition des Ausgleichselements an der Ausgangswelle eine flächige Anlage des Ausgleichselements sowohl am Axialanschlag, wie auch an der Anlagefläche des Gehäuses. Hierdurch wird in besonders zuverlässiger Weise eine axialspielfreie Anordnung gewährleistet, welche über die gesamte Lebensdauer des Verstellantriebs bestehen bleibt.

Die Ausgestaltung der Anlagefläche mit einer entsprechend dem Ausgleichselement geneigten Form kann dabei grundsätzlich in beliebiger Weise erfolgen. So kann an dem Gehäuse im Bereich der Anlagefläche ein Anbauteil angeordnet werden, welches mit der Gehäusewand verbunden ist. Nach einer besonders vorteilhaften Ausgestaltung der Erfindung ist die Anlagefläche jedoch einstückig mit dem Gehäuse ausgebildet. Hierdurch lässt sich der Verstellantrieb in entsprechend weitergebildeter Form besonders einfach und kostengünstig herstellen, da auf einen zusätzlichen Montageaufwand zur Bereitstellung einer entsprechend geneigten Anlagefläche verzichtet werden kann.

Die Anordnung des Ausgleichselements gegenüber der Ausgangswelle, d. h. insbesondere die radiale Verstellung des Ausgleichselements im Rahmen einer Vormontage in Richtung auf die Ausgangswelle in die Betriebsposition, in der das Ausgleichselement die Ausgangswelle in einer spielfreien Position lagert, kann grundsätzlich in beliebiger Weise erfolgen. Nach einer besonders vorteilhaften Ausgestaltung der Erfindung ragt das Ausgleichselement jedoch mit einem Betätigungsabschnitt, insbesondere mit einem radial gegenüber der Ausgangswelle vorstehenden Vorsprung aus einer Gehäuseöffnung heraus.

Gemäß dieser Ausgestaltung der Erfindung, wonach der Betätigungsabschnitt vorzugsweise einen gegenüber dem übrigen Ausgleichselement geringeren Querschnitt aufweist, lässt sich der Verstellantrieb mit dem Ausgleichselement in einfacher Weise am Gehäuse vormontieren, so dass das Ausgleichselement bereits hierdurch relativ gegenüber der Ausgangswelle sowie gegenüber dem Gehäuse in einer Vorposition gesichert ist. Eine Verlagerung des Ausgleichselements erfolgt dann über eine Krafteinwirkung auf den Betätigungsabschnitt in radialer Richtung, wodurch das Ausgleichselement in Richtung auf die Ausgangswelle verschoben wird. In der Betriebsposition kann dann - unter Beibehaltung der eingestellten Betriebsposition - das Ausgleichselement mit dem Gehäuse durch Ultraschallschweißen verbunden werden. Umfangreiche Lagesicherungsmaßnahmen des Ausgleichselements in seiner Betriebsposition vor einer Verschweißung können hierdurch vermieden werden. Besonders vorteilhafterweise kann der Betätigungsabschnitt mit einer Sollbruchstelle versehen sein, welche es nach der Verbindung des Ausgleichselements mit dem Gehäuse in einfacher Weise ermöglicht, unter Umständen störende, von dem Gehäuse vorstehende Abschnitte des Ausgleichselements durch einfaches Abknicken, Abschlagen, Abbrechen oder dergleichen zu entfernen.

Die Verbindung des Ausgleichselements mit dem Gehäuse kann grundsätzlich an beliebiger Stelle erfolgen. Nach einer besonders vorteilhaften Ausgestaltung der Erfindung ist das Ausgleichselement jedoch mittels Ultraschallschweißen mit dem Gehäusedeckel verbunden. Diese Verbindung lässt sich besonders einfach herstellen und ermöglicht es, den Gehäusedeckel mit einem zur Verbindung vorbereiteten Abschnitt zu versehen, was sich im Gegensatz zur entsprechenden Ausgestaltung des gesamten Gehäuses besonders einfach und kostengünstig realisieren lässt.

Um eine Fehlmontage des Ausgleichselements gegenüber der Ausgangswelle vorzubeugen, insbesondere wenn die Anlagefläche im Gehäuse eine entsprechend dem Ausgleichselement geneigte Form aufweist, ist das Ausgleichselement gemäß einer weiteren Ausgestaltung der Erfindung derart ausgebildet, dass dessen fehlerhafte Ausrichtung gegenüber der Ausgangswelle ausgeschlossen ist. Hierdurch wird in besonders vorteilhafter Weise eine vorgegebene Anordnung des Ausgleichselements gesichert. Die Ausgestaltung kann dabei grundsätzlich in beliebiger Weise erfolgen, wobei besonders vorteilhafterweise das Ausgleichselement zu dessen Ausrichtung eine Ausformung aufweist, durch die das Ausgleichselement eine asymmetrische Form aufweist, die bei einer entsprechenden Ausgestaltung des Gehäuses nur eine Einbaulage ermöglicht. Als Ausformung können dabei Vorsprünge, Stege oder Erhebungen vorgesehen sein, die sich entlang vorzugsweise einer Seite des Ausgleichselements erstrecken.

Grundsätzlich genügt bereits die mittels Ultraschweißen hergestellte Verbindung des Ausgleichselements mit dem Gehäuse den Stabilitätsanforderungen, um den auftretenden Belastungen zu widerstehen, so dass zuverlässig die axialspielfreie Anordnung der Ausgangswelle gewährleistet werden kann. Erfindungsgemäß ist im Bereich der Ultraschallschweißung ein Sicherungsbolzen in das Gehäuse, bevorzugt in den Gehäusedeckel und das Ausgleichselement eingebettet. Ein sich gemäß dieser Ausgestaltung der Erfindung sowohl durch das Gehäuse wie auch das Ausgleichselement oder zumindest Teilbereiche dieser Bauteile erstreckender Sicherungsbolzen sichert die Position des Ausgleichselements gegenüber der Ausgangswelle sowie dem Gehäuse in ergänzender Weise.

Die Anordnung des Sicherungsbolzens an dem Gehäuse und dem Ausgleichselement vor der Ultraschallschweißung gewährleistet darüber hinaus, dass nach Abschluss der Verschweißung neben einer kraft- und/oder formschlüssigen Verbindung zusätzlich eine stoffschlüssige Verbindung zwischen dem Sicherungsbolzen, dem Gehäuse und dem Ausgleichselement vorliegt, nachdem der Kunststoff beim Ultraschallschweißen aufschmilzt und den Sicherungsbolzen stoffschlüssig mit dem Gehäuse und dem Ausgleichselements verbindet. Die Verwendung eines Sicherungsbolzens erhöht dabei die Scherfestigkeit des Verbundes, so dass durch den Sicherungsbolzen höhere Scherlasten übertragen werden können.

Die Ausgestaltung des Sicherungsbolzens ist grundsätzlich frei wählbar, wobei dieser grundsätzlich auch durch einen einfachen zylindrischen Stift gebildet sein kann, welcher bspw. vor Durchführung der Ultraschallschweißung in einer vorteilhafterweise vorgesehenen Bohrung im Ausgleichselement und/oder Gehäuse angeordnet werden kann.

Nach einer besonders vorteilhaften Ausgestaltung der Erfindung weist der Sicherungsbolzen jedoch einen sich in Richtung auf das Ausgleichselement verjüngenden Endabschnitt und/oder einen in Längsachsenrichtung verändernden Querschnitts und/oder einen von einer Kreisform abweichenden Querschnitt auf. Gemäß dieser Ausgestaltung der Erfindung kann der Sicherungsbolzen bspw. eine den verjüngenden Endabschnitt bildende Spitze aufweisen, welche eine Anordnung des Sicherungsbolzens erleichtert.

Zur Verbesserung der Stabilität des Verbundes aus Sicherungsbolzen, Ausgleichselement und Gehäuse kann der Sicherungsbolzen einen sich in Längsachsenrichtung verändernden Querschnitt aufweisen, wobei die Mantelfläche bspw. umlaufende Vorsprünge oder ein Gewinde aufweist. Durch diese Ausgestaltung, ebenso wie durch axial verlaufende Stege oder Vorsprünge, die zu einem von einer Kreisform abweichenden Querschnitt des Sicherungsbolzens führen, weist der Sicherungsbolzen eine Vielzahl von Hinterschneidungen auf, in die der plastifizierte Kunststoff während des Schweißvorgangs fließt und was zu einer besonders guten Verbindung führt.

Nach einer besonders vorteilhaften Ausgestaltung der Erfindung ist der Sicherungsbolzen zur Ankopplung an einen Ultraschallschwingungserzeuger und zur Übertragung von Ultraschallschwingungen in das Gehäuse und/oder das Ausgleichselement ausgebildet. Gemäß dieser Ausgestaltung der Erfindung erlaubt der Sicherungsbolzen die Ankopplung bzw. Verbindung mit einem Ultraschallschwingungserzeuger, bspw. einer Sonotrode und ist darüber hinaus zur Übertragung von Ultraschallschwingungen in das Gehäuse und/oder das Ausgleichselement ausgebildet.

Der vorzugsweise metallische Sicherungsbolzen bildet gemäß dieser Ausgestaltung eine Verlängerung der Sonotrode, so dass eine gezielte Wärmeeinleitung erreicht werden kann, durch die eine besonders homogene Verbindung gebildet werden kann. Im Anschluss an den Ultraschweißvorgang wird dann die Sonotrode von dem Sicherungsbolzen getrennt, welcher dann in der angeordneten Position verbleibt.

Kennzeichnend für das erfindungsgemäße Verfahren zur Herstellung eines Verstellantriebs, mit
- einem Gehäuse,
- einer in dem Gehäuse drehbar gelagerten Ausgangswelle und
- einem keilförmigen Ausgleichselement zur Vermeidung eines Axialspiels der Ausgangswelle, wobei das Ausgleichselement in seiner Betriebsposition an dem Gehäuse
   und einem Axialanschlag der Ausgangswelle abgestützt ist,
ist, dass zur Sicherung der die axialspielfreie Anordnung der Ausgangswelle festlegenden Betriebsposition des Ausgleichselements folgende Verfahrensschritte durchgeführt werden:
- lösbares Koppeln eines Sicherungsbolzens mit einem Ultraschallschwingungserzeuger,
- in Eingriff bringen des Sicherungsbolzens mit dem Gehäuse und dem Ausgleichselement,
- Einleiten von Ultraschallschwingungen über den Sicherungsbolzen in das Ausgleichselement und das Gehäuse zur Plastifizierung des den Sicherungsbolzens umgebenden Kunststoffs und
- Trennen des Sicherungsbolzens von dem Ultraschallschwingungserzeuger.

Wesentlich für das erfindungsgemäße Verfahren ist, dass der Sicherungsbolzen zur Übertragung der Ultraschallschwingungen in das Gehäuse und das Ausgleichselement dient, so dass während des Ultraschallschweißvorgangs eine besonders gute Aufschmelzung des den Sicherungsbolzen umgebenden Kunststoffs erreicht werden kann, infolge dessen sich eine besonders homogene und zuverlässige Verbindung zwischen dem Gehäuse, dem Ausgleichselement und dem Sicherungsbolzen ergibt, so dass das Ausgleichselement besonders zuverlässig in seiner Betriebsposition, in der dieses die Ausgangswelle axialspielfrei festlegt, gesichert ist.

Die Verbindung des Sicherungsbolzens mit dem Ultraschallschwingungserzeuger kann dabei sowohl vor wie auch nach der Anordnung des Sicherungsbolzens an dem Gehäuse und dem Ausgleichselements erfolgen. Nach der Positionierung des Sicherungsbolzens und Ankopplung an bspw. eine Sonotrode erfolgt dann eine Übertragung der Ultraschallschwingungen von dem Ultraschallschwingungserzeuger auf den Sicherungsbolzen. Nach ausreichender Plastifizierung des den Sicherungsbolzen umgebenden Kunststoffs und der nachfolgenden Verschweißung wird nach Beendigung des Ultraschallschweißvorgangs der Ultraschallschwingungserzeuger von dem Sicherungsbolzen getrennt. Die Ausgestaltung der lösbaren Verbindung von Sicherungsbolzen und Ultraschallschwingungserzeuger kann dabei in beliebiger Weise ausgeführt werden, sofern die Übertragung der Ultraschallschwingungen gewährleistet ist.

Grundsätzlich besteht die Möglichkeit, den Sicherungsbolzen derart auszuführen, dass er an beliebiger Stelle in das Gehäuse und das Ausgleichselement einsteckbar ist, wobei hierzu insbesondere eine Ausgestaltung des Sicherungsbolzens mit einer Spitze und/oder einem Gewinde, einer Rändelung o. ä. denkbar ist.

Nach einer besonders vorteilhaften Ausgestaltung der Erfindung ist der Sicherungsbolzen jedoch zur Herstellung eines Eingriffs mit dem Gehäuse, insbesondere Gehäusedeckel und dem Ausgleichselement in eine zuvor in das Gehäuse und/oder das Ausgleichselement eingebrachte Öffnung, insbesondere Bohrung eingesteckt.

Diese Ausgestaltung der Erfindung, wobei die Öffnung sowohl in beiden Bauteilen, aber auch nur in einem Bauteil vorhanden sein kann, erleichtert die Anordnung des Sicherungsbolzens bzw. Positionierung des Sicherungsbolzens an dem Ausgleichselement und dem Gehäuse. Die Eindringtiefe des Sicherungsbolzens ist dabei in der Regel derart, dass dieser im montierten Zustand nicht von dem Gehäuse oder dem Ausgleichselement, d. h. in das Innere des Verstellantriebs oder von der Außenwand vorsteht.

Zur Erzeugung einer besonders homogenen und zuverlässigen Verbindung ist gemäß einer Weiterbildung des Verfahrens ferner vorgesehen, dass die Ultraschallschwingungen über eine vorgegebene Zeit und/oder bis zu einer vorgegebenen Ausbreitung des sich um den Sicherungsbolzens plastifizierenden Kunststoffs eingeleitet werden. Diese Ausgestaltung der Erfindung, wobei die einzustellende Dauer der Ultraschallerzeugung in der Regel auf empirischen Daten basiert oder die Regelung der Ultraschallschweißung durch Festlegung der Ausbreitung des sich plastifizierenden Kunststoffs, erlaubt es, eine besonders zuverlässige Verbindung herzustellen, wobei sich das Herstellungsverfahren aufgrund der festgelegten Parameter in besonders einfacher Weise durchführen lässt.

Der plastifizierte Kunststoff, worunter ein erschmolzener Kunststoff verstanden wird, ermöglicht eine stoffschlüssige Verbindung zwischen dem Gehäuse, dem Ausgleichselement und dem Sicherungsbolzen und gewährleistet in besonderem Maße eine zuverlässige Lagesicherung des Ausgleichselements in dessen Betriebsposition. Zudem kann der plastifizierte Kunststoff in ggf. vorhandene, aufgrund der Ausgestaltung des Sicherungsbolzens bestehende Hinterschneidung gelangen, welche die Verbindung besonders zuverlässig ausgestaltet.

Nachstehend wird ein Ausführungsbeispiel der Erfindung mit Bezug auf die Zeichnungen erläutert. In den Zeichnungen zeigen:
- Fig. 1: eine perspektivische Ansicht einer Verstellvorrichtung mit einem Gehäuse und einer aus dem Gehäuse herausragenden Ausgangswelle;
- Fig. 2: eine Draufsicht auf die Verstellvorrichtung von Fig. 1;
- Fig. 3: eine Ansicht eines Schnitts entlang der Schnittlinie A-A von Fig. 2;
- Fig. 4: eine perspektivische Ansicht eines Gehäusedeckels des Gehäuses der Verstellvorrichtung von Fig. 1;
- Fig. 5: eine perspektivische Ansicht eines Ausgleichselement der Verstellvorrichtung von Fig. 1;
- Fig. 6: eine perspektivische Ansicht des Gehäusedeckels von Fig. 4 und des Ausgleichselements von Fig. 5 in einer Zusammenbaulage;
- Fig. 7: eine Ansicht eines Schnitts einer weiteren Ausführungsform einer Verstellvorrichtung mit Sicherungsbolzen und
- Fig. 8: eine perspektivische Ansicht des Sicherungsbolzens von Fig. 7.

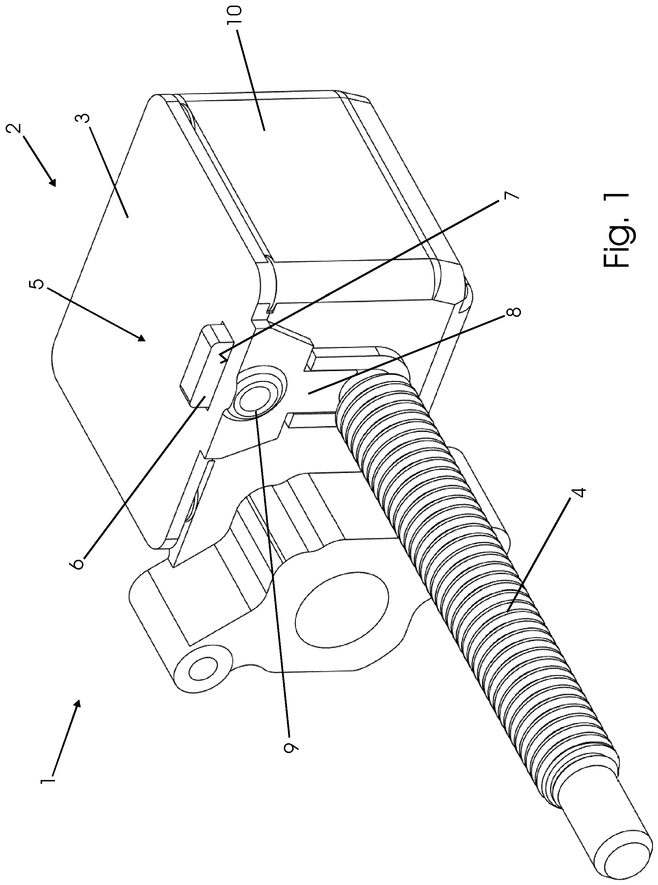

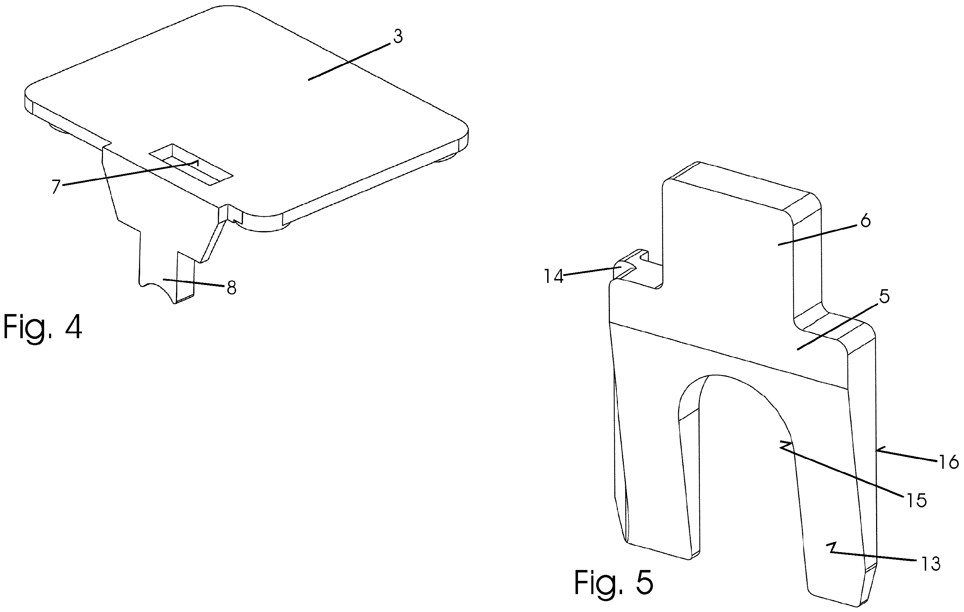

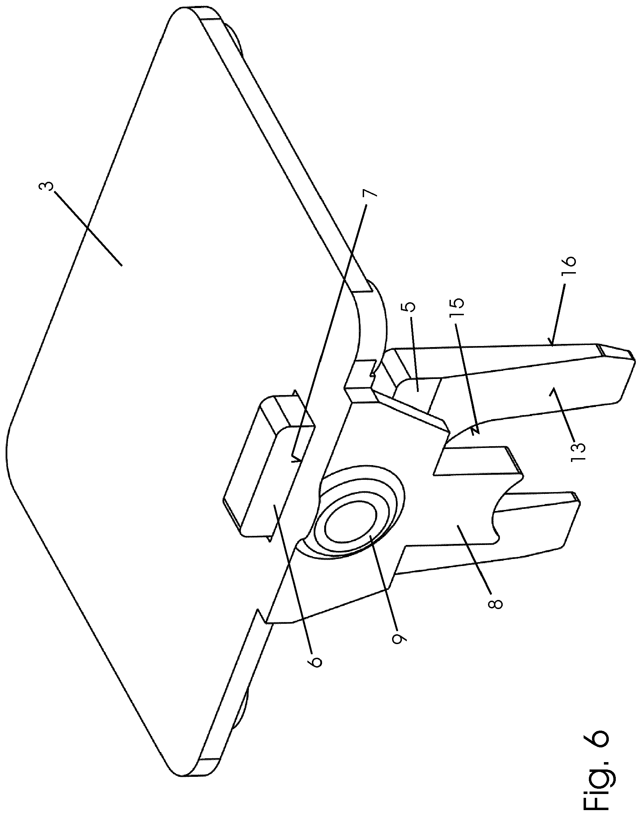

Ein Ausführungsbeispiel eines Verstellantriebs 1 sowie dessen Komponenten ist in den Fig. 1 bis 6 dargestellt. Der Verstellantrieb 1 weist ein aus einem Gehäusegrundkörper 10 und einem Gehäusedeckel 3 gebildetes Gehäuse 2 auf, an dem eine Ausgangswelle 4 des Verstellantriebs 1 drehbar gelagert ist. Die Ausgangswelle 4, welche mit einer hier nicht dargestellten verstellbaren Fahrzeugkomponente verbindbar ist, ist dabei über ein nur skizzenhaft dargestelltes Ritzel 12 antreibbar.

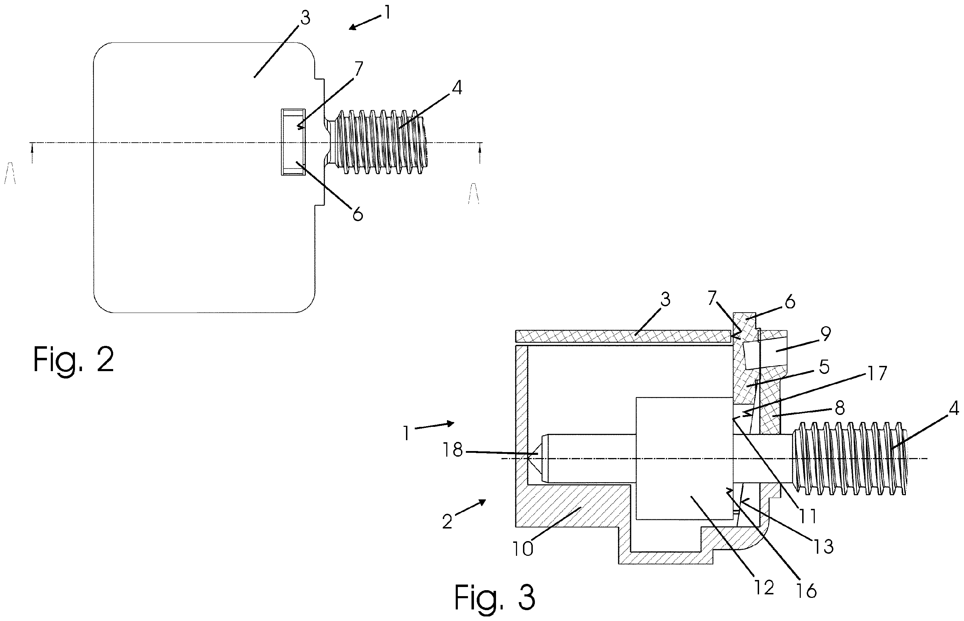

Zur für einen störungsfreien Betrieb erforderlichen axialspielfreien Anordnung der Ausgangswelle 4 an dem Gehäuse 2 weist der Verstellantrieb 1 ein keilförmiges Ausgleichselement 5 auf, welches in der in Fig. 1 und 3 dargestellten Betriebsposition die Ausgangswelle 4 in einer axialspielfreien Lage festlegt. In der Betriebsposition liegt dabei das Ausgleichselement 5 mit einer Anschlagfläche 16 an einem durch das Ritzel 12 gebildeten Axialanschlag 11 und mit einer Stützfläche 13 an einer entsprechend der Keilform des Ausgleichselements 5 geneigten Anlagefläche 17 einer Innenseite des Gehäusegrundkörpers 10 an, wobei gleichzeitig zur Erzielung einer axialspielfreien Anordnung der Ausgangswelle 4, diese mit ihrem innerhalb des Gehäuses 2 angeordneten Wellenende mit einem kegelförmigen, spitz zulaufenden Stützlager 18 an der der Anlagefläche 17 gegenüberliegenden Gehäuseinnenwand anliegt. In Abhängigkeit von der radialen Position des keilförmigen Ausgleichselements 5 gegenüber der Ausgangswelle 4 bestimmt sich dabei die Position der Ausgangswelle 4 in axialer Richtung, so dass durch die Verschiebung des Ausgleichselements 5 in radialer Richtung die Ausgangswelle 4 in eine spielfreie Position verlagert ist.

Das Stützlager 18 kann ebenso wie der Bereich des Gehäusegrundkörpers 10, an dem das Stützlager 18 an der Gehäuseinnenwand anliegt, zur Erzielung einer Lagesicherung sowie einer möglichst geringen Reibung beliebig ausgebildet sein. So kann der Gehäusegrundkörper 10 bspw. im Bereich des Stützlagers 18 mit einer hier nicht dargestellten separat angebrachten oder im Rahmen des Herstellungsprozesses des Gehäusegrundkörpers 10 in diesen eingebetteten, vorzugsweise metallischen Anlaufscheibe versehen sein. Das Stützlager 18 kann alternativ zur dargestellten kegelförmigen Ausgestaltung durch eine Kugel gebildet sein, die drehbar am Wellenende angeordnet ist.

Zur Sicherung der Betriebsposition des Ausgleichselements 5 gegenüber dem Gehäuse 2 ist das Ausgleichselement 5 mit einem Steg 8 des Gehäusedeckels 3, welcher sich in radialer Richtung auf die Ausgangswelle 4 erstreckt, über einen Ultraschallschweißpunkt 9 mit dem Gehäusedeckel 3 verbunden. Durch die lagestabile Verbindung von Gehäusegrundkörper 10 und Gehäusedeckel 3, welcher über einen entsprechend dem Querschnitt der Ausgangswelle 4 bogenförmigen Abschnitt des Stegs 8 ferner gemeinsam mit dem Gehäusegrundkörper 10 das Radiallager der Ausgangswelle 4 bildet, ist somit die axialspielfreie Position der Ausgangswelle 4 gesichert.

Die Lage des Ausgleichselements 5 an der Ausgangswelle 4 wird u. a. durch eine U-förmige Aufnahmeöffnung 15 bestimmt, die sich in der Betriebsposition im Bereich um die Ausgangswelle 4 herum erstreckt. Zur Verlagerung des Ausgleichselements aus einer Vorposition in die Betriebsposition dient ein Vorsprung 6, der in radialer Richtung betrachtet auf der der U-förmigen Aufnahmeöffnung 15 gegenüberliegenden Seite des Ausgleichselements 5 verläuft und in der vormontierten und montierten Lage des Ausgleichselements 5 durch eine Öffnung 7 im Gehäusedeckel 3 ragt. In der vormontierten Lage kann somit durch eine komfortable Verschiebung des Vorsprungs 6, welcher aus der Gehäuseöffnung 7 des bereits montierten Gehäuses 2 herausragt, das Ausgleichselement 5 in Richtung auf die Ausgangswelle 4 bis in die Betriebsposition verschoben werden, in der das Ausgleichselement 5 durch Ultraschallschweißen mit dem Gehäusedeckel 3 untrennbar verbunden ist.

Um eine geringe Reibung zwischen dem Axialanschlag 11 und der Anschlagfläche 16 zu erzielen, können diese bspw. aus geeigneten Materialien gebildet oder mit reibungsarmen Beschichtungen versehen sein. Gemäß einer hier nicht dargestellten Ausführungsform kann zwischen dem Ritzel 12 und dem Ausgleichselement 5 auch ein Lager, bspw. ein Kugellager angeordnet werden, welches einen besonders reibungsarmen Betrieb ermöglicht.

Eine einerseits an dem Ausgleichselement 5 angeordnete Ausformung 14, welche mit einer entsprechenden Ausnehmung im Gehäuse 2 zusammenwirkt, ermöglicht eine einzige Montagelage des Ausgleichselements 5, relativ gegenüber der Ausgangswelle 4, so dass gewährleistet ist, dass die Stützfläche 13 mit einer entsprechend geneigten Anlagefläche 17 an einer Gehäuseinnenwand des Gehäusegrundkörpers 10 flächig zur Anlage kommt.

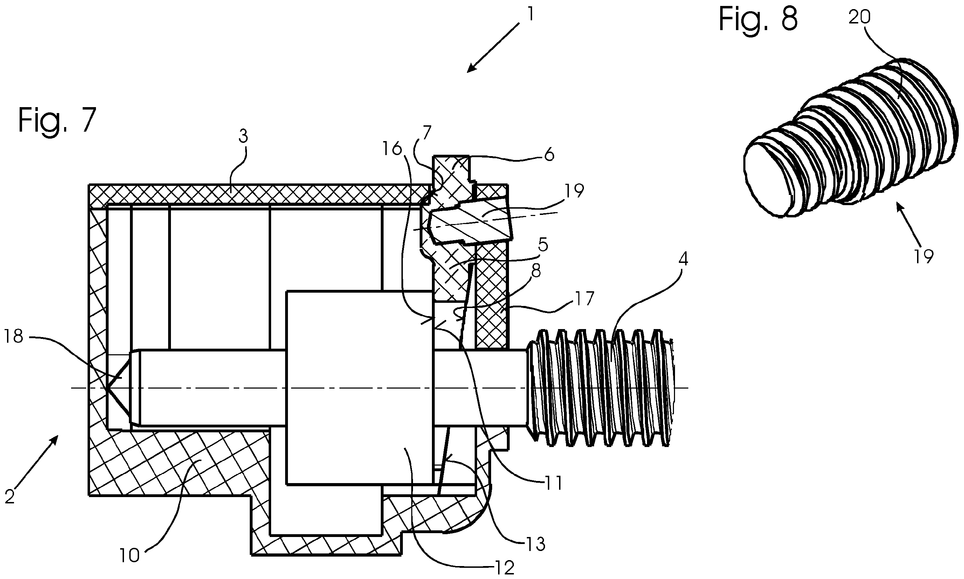

In Fig. 7 ist eine Ansicht eines Schnittes einer weiteren Ausführungsform einer Verstellvorrichtung 1 mit einem Sicherungsbolzen 19 dargestellt, wobei sich der Sicherungsbolzen 19 durch den Steg 8 des Gehäuses 2 bis in das Ausgleichselement 5 erstreckt, so dass der Sicherungsbolzen 19 zusätzlich die Position des Ausgleichselements 5 gegenüber dem Gehäuse 2 sichert. Der Sicherungsbolzen 19 dient dabei auch zur Einbringung der Ultraschallschwingungen in das Ausgleichselement 5 und das Gehäuse 2, wodurch der Bereich um den Sicherungsbolzen 19 plastifiziert, d. h. aufgeschmolzen wird und sich eine Ultraschallverschweißung ergibt. Zur Einbringung der Ultraschallschwingungen wird dabei der Sicherungsbolzen 19 vor oder nach dessen Anordnung an dem Gehäuse 2 und dem Ausgleichselement 5 mit einer nicht dargestellte Sonotrode gekoppelt.

Um eine besonders zuverlässige Anordnung des Sicherungsbolzens 19 zu gewährleisten, weist dieser an seinem Umfang eine Art Gewinde 20 auf, in dessen Zwischenräume der plastifizierte Kunststoff beim Ultraschallschweißen fließt, wodurch sich neben einer formschlüssigen auch eine stoffschlüssige Verbindung ergibt, die eine besonders hohe Qualität aufweist.

Während des Ultraschallschweißprozesses werden die Ultraschallschwingungen über einen Schallwandler in mechanische Schwingungsenergie umgewandelt. Die beim Ultraschallschweißen zum Plastifizieren benötigte Wärme wird dabei durch das Einbringen mechanischer Schwingungen erreicht, wobei diese unter einem geregelten Anpressdruck einer Sonotrode den zu verschweißenden Bauteilen 5, 8, 19 zugeführt wird. Durch die Gestaltung des Verbindungsbolzens 19 dient dieser der gezielten Wärmeeinleitung, wobei durch eine Molekular- und Grenzflächenreibung an den Flanken des Gewindes 20 Wärme entsteht, in deren Bereich der Kunststoff zu schmelzen beginnt, so dass dann der plastifizierte Kunststoff in den Bereich zwischen den Flanken des Gewindes 20 fließt.

Um eine gute Anordnung des Sicherungsbolzens zu ermöglichen, weist der zur Aufnahme am Gehäuse 2 vorgesehene Gehäusedeckel 3 eine Vorbohrung auf, die an das Ausgleichselement 5 angepasst ist.

## Patentansprüche

1. Verstellantrieb, insbesondere für eine Lenksäulenverstellung oder einen Fahrzeugsitz eines Kraftfahrzeuges, mit
- einem Gehäuse (2),
- einer in dem Gehäuse drehbar gelagerten Ausgangswelle (4) und
- einem keilförmigen Ausgleichselement (5) zur Vermeidung eines Axialspiels der Ausgangswelle, wobei das Ausgleichselement in seiner Betriebsposition an dem Gehäuse und einem Axialanschlag der Ausgangswelle abgestützt ist,
**dadurch gekennzeichnet, dass**
das Ausgleichselement (5) zur Sicherung der axialspielfreien Anordnung der Ausgangswelle (4) in seiner Betriebsposition mittels Ultraschallschweißen mit dem Gehäuse (2) verbunden ist und im Bereich der Ultraschallschweißung in das Gehäuse (2) und das Ausgleichselement (5) ein Sicherungsbolzen (19) eingebettet ist.

2. Verstellantrieb nach Anspruch 1, **dadurch gekennzeichnet, dass** das Ausgleichselement (5) eine U-förmige Aufnahmeöffnung (15) aufweist, die die Ausgangswelle (4) im Bereich eines einen Axialanschlag (11) bildenden Wellenabsatzes umgreift.

3. Verstellantrieb nach Anspruch 1 oder 2, **dadurch gekennzeichnet, dass** das Ausgleichselement (5) in der Betriebsposition mit einer dem Axialanschlag (11) abgewandten Stützfläche (13) an einer Anlagefläche (17) des Gehäuses anliegt.

4. Verstellantrieb nach einem der vorhergehenden Ansprüche, **dadurch gekennzeichnet, dass** die Anlagefläche (17) gegenüber einer vertikal zur Ausgangswelle (4) verlaufenden Ebene entsprechend der Keilform des Ausgleichselements (5) entgegengesetzt geneigt ist.

5. Verstellantrieb nach einem der vorhergehenden Ansprüche, **dadurch gekennzeichnet, dass** die Anlagefläche (17) einstückig mit dem Gehäuse (2) ausgebildet ist.

6. Verstellantrieb nach einem der vorhergehenden Ansprüche, **dadurch gekennzeichnet, dass** das Ausgleichselement (5) mit einem Betätigungsabschnitt, insbesondere mit einem radial gegenüber der Ausgangswelle (4) vorstehenden Vorsprung (6) aus einer Gehäuseöffnung (7) herausragt.

7. Verstellantrieb nach einem der vorhergehenden Ansprüche, **dadurch gekennzeichnet, dass** das Ausgleichselement (5) mittels Ultraschallschweißen mit einem Gehäusedeckel (3) verbunden ist.

8. Verstellantrieb nach einem der vorliegenden Ansprüche, **dadurch gekennzeichnet, dass** das Ausgleichselement (5) derart ausgebildet ist, dass dessen fehlerhafte Ausrichtung gegenüber der Ausgangswelle (4) ausgeschlossen ist.

9. Verstellantrieb nach einem der vorhergehenden Ansprüche, **dadurch gekennzeichnet, dass** das Ausgleichselement (5) zu dessen Ausrichtung eine Ausformung (14) aufweist.

10. Verstellantrieb nach einem der vorhergehenden Ansprüche, **gekennzeichnet durch** einen im Bereich der Ultraschallschweißung in den Gehäusedeckel (3) und das Ausgleichselement (5) eingebetteten Sicherungsbolzen (19).

11. Verstellantrieb nach einem der vorhergehenden Ansprüche, **dadurch gekennzeichnet, dass** der Sicherungsbolzen (19) einen sich in Richtung auf das Ausgleichselement (5) verjüngenden Endabschnitt und/oder einen sich in Längsachsenrichtung verändernden Querschnitt und/oder einen von einer Kreisform abweichenden Querschnitt aufweist.

12. Verstellantrieb nach einem der vorhergehenden Ansprüche, **dadurch gekennzeichnet, dass** der Sicherungsbolzen (19) zur Ankopplung an einen Ultraschallschwingungserzeuger und zur Übertragung von Ultraschallschwingungen in das Gehäuse (2) und/oder das Ausgleichselement (5) ausgebildet ist.

13. Verfahren zur Herstellung eines Verstellantriebs, mit
- einem Gehäuse,
- einer in dem Gehäuse drehbar gelagerten Ausgangswelle und
- einem keilförmigen Ausgleichselement zur Vermeidung eines Axialspiels der Ausgangswelle, wobei das Ausgleichselement in seiner Betriebsposition an dem Gehäuse und einem Axialanschlag der Ausgangswelle abgestützt ist,
**dadurch gekennzeichnet, dass**
zur Sicherung der die axialspielfreie Anordnung der Ausgangswelle (4) festlegenden Betriebsposition des Ausgleichselements (5) folgende Verfahrensschritte durchgeführt werden:
- lösbares Koppeln eines Sicherungsbolzens (19) mit einem Ultraschallschwingungserzeuger
- in Eingriffbringen des Sicherungsbolzens (19) mit dem Gehäuse (2) und dem Ausgleichselement (5),
- Einleiten von Ultraschallschwingungen über den Sicherungsbolzen (19) in das Ausgleichselement (5) und das Gehäuse (2) zur Plastifizierung des den Sicherungsbolzen (19) umgebenden Kunststoffs und
- Trennen des Sicherungsbolzens (19) von dem Ultraschallschwingungserzeuger.

14. Verfahren nach Anspruch 13, **dadurch gekennzeichnet, dass** der Sicherungsbolzen (19) zur Herstellung eines Eingriffs mit dem Gehäuse (2), insbesondere Gehäusedeckel (3) und dem Ausgleichselement (5) in eine zuvor in das Gehäuse (2) und/oder das Ausgleichselement (5) eingebrachte Öffnung, insbesondere Bohrung eingesteckt wird.

15. Verfahren nach Anspruch 13 oder 14, **dadurch gekennzeichnet, dass** die Ultraschallschwingungen über eine vorgegebene Zeit und/oder bis zu einer vorgegebenen Ausbreitung des sich um den Sicherungsbolzen (19) plastifizierenden Kunststoffs eingeleitet werden.

## Claims

1. Adjusting drive, in particular for a steering column adjustment or a vehicle seat of a motor vehicle, with
- a housing (2),
- an output shaft (4) which is mounted rotatably in the housing, and
- a wedge-shaped compensating element (5) for avoiding an axial play of the output shaft, wherein the compensating element is supported in its operating position on the housing and on an axial stop of the output shaft,
**characterized in that,** in order to secure the axial-play-free arrangement of the output shaft (4), the compensating element (5) is connected in its operating position to the housing (2) by means of ultrasonic welding, and a securing pin (19) is embedded in the housing (2) and the compensating elements (5) in the region of the ultrasonic welding.

2. Adjusting drive according to Claim 1, **characterized in that** the compensating element (5) has a U-shaped receiving opening (15) which embraces the output shaft (4) in the region of a shaft shoulder forming an axial stop (11).

3. Adjusting drive according to Claim 1 or 2, **characterized in that**, in the operating position, the compensating element (5) lies against a contact surface (17) of the housing with a support surface (13) which phases away from the axial stop (11).

4. Adjusting drive according to one of the preceding claims, **characterized in that** the contact surface (17) is inclined in an opposed manner in relation to a plane running vertically with respect to the output shaft (4), corresponding to the wedge shape of the compensating element (5).

5. Adjusting drive according to one of the preceding claims, **characterized in that** the contact surface (17) is formed integrally with the housing (2).

6. Adjusting drive according to one of the preceding claims, **characterized in that** the compensating element (5) projects out of a housing opening (7) by means of an actuating portion, in particular by means of a projection (6) protruding radially in relation to the output shaft (4).

7. Adjusting drive according to one of the preceding claims, **characterized in that** the compensating element (5) is connected to a housing cover (3) by means of ultrasonic welding.

8. Adjusting drive according to one of the preceding claims, **characterized in that** the compensating element (5) is designed in such a manner that the erroneous alignment thereof in relation to the output shaft (4) is prevented.

9. Adjusting drive according to one of the preceding claims, **characterized in that** the compensating element (5) has a formation (14) for the alignment thereof.

10. Adjusting drive according to one of the preceding claims, **characterized by** a securing pin (19) which is embedded in the housing cover (3) and the compensating element (5) in the region of the ultrasonic welding.

11. Adjusting drive according to one of the preceding claims, **characterized in that** the securing pin (19) has an end portion tapering in the direction of the compensating element (5) and/or a cross section changing in the direction of the longitudinal axis and/or a cross section differing from a circular shape.

12. Adjusting drive according to one of the preceding claims, **characterized in that** the securing pin (19) is designed for coupling to an ultrasonic vibration generator and for transmitting ultrasonic vibrations into the housing (2) and/or the compensating element (5).

13. Method for producing an adjusting drive, with
- a housing,
- an output shaft which is mounted rotatably in the housing, and
- a wedge-shaped compensating element for avoiding axial play of the output shaft, wherein the compensating element is supported in its operating position on the housing and on an axial stop of the output shaft,
**characterized in that**,
in order to secure the operating position of the compensating element (5) defining the axial-play-free arrangement of the output shaft (4), the following method steps are carried out:
- releasably coupling a securing pin (19) to an ultrasonic vibration generator,
- bringing the securing pin (19) into engagement with the housing (2) and the compensating element (5),
- introducing ultrasonic vibrations via the securing pin (19) into the compensating element (5) and the housing (2) in order to plasticize the plastic surrounding the securing pin (19), and
- separating the securing pin (19) from the ultrasonic vibration generator.

14. Method according to claim 13, **characterized in that**, in order to produce an engagement with the housing (2), in particular housing cover (3) and the compensating element (5), the securing pin (19) is inserted into an opening, in particular hole, previously introduced into the housing (2) and/or the compensating element (5).

15. Method according to claim 13 or 14, **characterized in that** the ultrasonic vibrations are introduced over a predetermined time and/or up to a predetermined expansion of the plastic plasticizing around the securing pin (19).

## Revendications

1. Entraînement d'ajustement, en particulier pour l'ajustement de la colonne de direction ou d'un siège d'un véhicule automobile, présentant
un boîtier (2),
un arbre de sortie (4) monté à rotation dans le boîtier et
un élément de compensation (5) en forme de biseau permettant d'empêcher un jeu axial de l'arbre de sortie, l'élément de compensation s'appuyant en position de fonctionnement sur le boîtier et sur une butée axiale de l'arbre de sortie,
**caractérisé en ce que**
l'élément de compensation (5) servant à garantir un agencement sans jeu axial de l'arbre de sortie (4) dans sa position de fonctionnement est relié au boîtier (2) par soudage par ultrasons et
**en ce qu'**un goujon de blocage (19) est incorporé dans le boîtier (2) et dans l'élément de compensation (5) au niveau de la soudure par ultrasons.

2. Entraînement d'ajustement selon la revendication 1, **caractérisé en ce que** l'élément de compensation (5) présente une ouverture de réception (15) en forme de U qui chevauche l'arbre de sortie (4) au niveau d'un appendice axial qui forme une butée axiale (11).

3. Entraînement d'ajustement selon les revendications 1 ou 2, **caractérisé en ce qu'**en position de fonctionnement, l'élément de compensation (5) repose par une surface de soutien (13) non tournée vers la butée axiale (11) sur une surface d'appui (17) du boîtier.

4. Entraînement d'ajustement selon l'une des revendications précédentes, **caractérisé en ce que** la surface d'appui (17) est inclinée en opposition à un plan s'étendant verticalement par rapport à l'arbre de sortie (4) et correspondant à la forme en biseau de l'élément de compensation (5).

5. Entraînement d'ajustement selon l'une des revendications précédentes, **caractérisé en ce que** la surface de pose (17) est formée d'un seul tenant avec le boîtier (2).

6. Entraînement d'ajustement selon l'une des revendications précédentes, **caractérisé en ce que** l'élément de compensation (5) déborde hors d'une ouverture (7) du boîtier par une partie d'actionnement, notamment une saillie (6) qui déborde radialement de l'arbre de sortie (4).

7. Entraînement d'ajustement selon l'une des revendications précédentes, **caractérisé en ce que** l'élément de compensation (5) est relié au couvercle (3) du boîtier par soudage par ultrasons.

8. Entraînement d'ajustement selon l'une des revendications précédentes, **caractérisé en ce que** l'élément de compensation (5) est configuré de manière à exclure une orientation erronée par rapport à l'arbre de sortie (4).

9. Entraînement d'ajustement selon l'une des revendications précédentes, **caractérisé en ce que** l'élément de compensation (5) présente une déformation (14) qui permet son alignement.

10. Entraînement d'ajustement selon l'une des revendications précédentes, **caractérisé par** un goujon de blocage (19) incorporé dans le couvercle (3) du boîtier et dans l'élément de compensation (5) au niveau de la soudure par ultrasons.

11. Entraînement d'ajustement selon l'une des revendications précédentes, **caractérisé en ce que** le goujon de blocage (19) présente une partie d'extrémité qui se rétrécit en direction de l'élément de compensation (5), une surface transversale qui varie dans le sens de la longueur de l'axe et/ou une section transversale d'une forme différente de celle d'un cercle.

12. Entraînement d'ajustement selon l'une des revendications précédentes, **caractérisé en ce que** le goujon de blocage (19) est configuré pour être accouplé à un émetteur de vibrations ultrasoniques et pour transférer des vibrations ultrasoniques dans le boîtier (2) et/ou dans l'élément de compensation (5).

13. Procédé de fabrication d'un entraînement d'ajustement présentant
un boîtier,
un arbre de sortie monté à rotation dans le boîtier et
un élément de compensation en forme de biseau permettant d'empêcher un jeu axial de l'arbre de sortie, l'élément de compensation s'appuyant en position de fonctionnement sur le boîtier et sur une butée axiale de l'arbre de sortie,
**caractérisé en ce que**
pour assurer l'agencement sans jeu axial de la position de fonctionnement de l'élément de compensation (5) qui assure un agencement de l'arbre de sortie (4) sans jeu axial, les étapes de traitement suivantes sont exécutées :
accouplement libérable d'un goujon de blocage (19) à un émetteur de vibrations ultrasoniques,
engagement du goujon de blocage (19) sur le boîtier (2) et l'élément de compensation (5),
application de vibrations ultrasoniques dans l'élément de compensation (5) et le boîtier (2) par l'intermédiaire du goujon de blocage (19), en vue de plastifier la matière synthétique qui englobe le goujon de blocage (19) et
séparation du goujon de blocage (19) du générateur de vibrations ultrasoniques.

14. Procédé selon la revendication 13, **caractérisé en ce que** le goujon de blocage (19) est inséré dans une ouverture, en particulier un alésage, ménagé préalablement dans le boîtier (2) et/ou l'élément de compensation (5) en vue d'établir un engagement avec le boîtier (2), en particulier le couvercle (3) du boîtier, et l'élément de compensation (5).

15. Procédé selon les revendications 13 ou 14, **caractérisé en ce que** les vibrations ultrasoniques sont introduites pendant une durée prédéterminée et/ou jusqu'à une propagation prédéterminée de la matière synthétique à plastifier autour du goujon de blocage (19).
